# EUROPÄISCHE PATENTSCHRIFT

(11) **EP 1 532 038 B1**
(45) Veröffentlichungstag und Bekanntmachung des Hinweises auf die Patenterteilung: **04.10.2006**
(21) Anmeldenummer: 03793677.0
(22) Anmeldetag: 02.08.2003
(51) Int. Cl.: B62D 33/06

(54) **FAHRERHAUS MIT LIEGE**
CAB COMPRISING A COUCHETTE
CABINE COMPORTANT UNE COUCHETTE

(30) Priorität: 17.08.2002 DE 10237794
(43) Veröffentlichungstag der Anmeldung: 25.05.2005
(73) Patentinhaber: Daimler Chrysler AG, 70567 Stuttgart (DE)
(72) Erfinder: HÖRNLE, Frank, 71254 Ditzingen (DE); WEIDLER, Dietmar, 27432 Bremervörde (DE)
(74) Vertreter: Wagner, Jürgen
(86) Internationale Anmeldenummer: PCT/EP2003/008588
(87) Internationale Veröffentlichungsnummer: WO 2004/022418

(56) Entgegenhaltungen:
- EP-A- 0 168 708
- EP-A- 0 453 769
- US-A- 4 054 956
- US-A- 4 141 093

## Beschreibung

Die Erfindung betrifft ein Fahrerhaus für ein Nutzfahrzeug nach den Merkmalen des Oberbegriffs des Anspruchs 1.

Aus der EP 01 68 708 B1 ist ein solches Fahrerhaus mit einer Liege bekannt. Die Liege ist über ein Gurt an einem Fahrerhausdach aufgehängt. Sie ist schwenkbar an der Rückwand des Fahrerhauses gelagert und kann von einer Gebrauchposition in eine Verstauposition hochgeklappt werden. In der Verstauposition hält der Gurt die Liege, indem er vom Fahrerhausdach gelöst und mit der Rückwand des Fahrerhauses verbunden wird. Diese Art der Liegensicherung ist relativ umständlich zu bedienen, da die hochgeklappte Liege den Zugang zu der Rückwand versperrt. Zudem wird der Gurt bzw. die Aufhängung des Gurtes bei hochgeklappter Liege infolge der ungünstigen Kräfteverteilung relativ stark belastet.

In der deutschen Offenlegungsschrift DE 16 30 334 ist eine Liege für ein Fahrerhaus gezeigt, die über einen Gurt am Fahrerhausdach aufgehängt ist. Ein speziell ausgebildetes Scharnier haltert die Liege in Ihrer Verstauposition so, dass diese eine Rückenlehne einer Sitzbank bildet.

Aufgabe der vorliegenden Erfindung ist es, ein Fahrerhaus mit einer Liege zu schaffen, wobei die Liege konstruktiv einfach aufgebaut ist, in Verstauposition sicher gehaltert ist und möglichst einfach bedienbar, d. h. von einer Gebrauchsposition in eine platzsparende Verstauposition bringbar ist.

Diese Aufgabe wird erfindungsgemäß durch ein Fahrerhaus nach den Merkmalen des Anspruchs 1 gelöst.

Der Gurt fixiert die Liege in einer platzsparenden Verstauposition, indem der Gurt ein Gurtschloss und eine Gurtzunge aufweist. Die Verstauposition ist dabei, im Gegensatz zu einer horizontalen Gebrauchsposition bei der die Liege eine horizontale Liegefläche aufweist, eine platzsparende, vorzugsweise nach oben zu dem Dach des Fahrerhauses hin weggeschwenkte, Position der Liege. Das Gurtschloss des Gurtes wirkt mit der Gurtzunge in der Verstauposition zum Haltern bzw. Sichern der Liege zusammen. Um die Liege möglichst einfach von der Gebrauchsposition in die Verstauposition zu verbringen und dort zu sichern, weist der Gurt eine Einführhilfe auf, die das Einführen der Gurtzunge in das Gurtschloss erleichtert. Die Liege kann einfach von einer horizontalen Gebrauchsposition in die hochgeklappte Verstauposition geschwenkt werden und dort durch Verbinden von Gurtschloss und Gurtzunge gesichert werden. Beispielsweise kann die Liege mit einer Hand hochgeklappt werden und das Gurtschloss mit der anderen Hand mit der Gurtzunge verbunden werden. Dabei hält die Einführhilfe das Gurtschloss vorteilhaft fest, so dass eine einfache Einhandbedienung des Gurtschlosses ermöglicht wird.

Es ist vorgesehen, das Gurtschloss im Bereich der Liegefläche anzuordnen und die Gurtzunge im Bereich des Fahrerhausdaches anzuordnen. Beim Verbinden von Gurtschloss mit Gurtzunge wird so der Gurt verkürzt und die Liege am Fahrerhausdach gesichert. In vorteilhafter Ausführung können die Gurtzunge und das Gurtschloss mit dem Gurt verbunden sein, vorzugsweise vernäht oder in einer Gurtschlinge befestigt sein.

In einer Ausführung ist vorgesehen, dass die Einführhilfe als Manschette ausgebildet ist, die Gurtzunge und einen Teil des Gurtes umgreift. Die Einführhilfe verbindet die bewegliche Gurtzunge mit dem flexiblen Gurt und stabilisiert so die Lage des Gurtschlosses. Die Einführhilfe stabilisiert mechanisch bzw. versteift einen Teil bzw. einen Abschnitt des Gurtes, insbesondere einen Abschnitt zwischen Gurtzunge und Fahrerhausdach. Beim manuellen Verbinden von dem Gurtschloss mit der Gurtzunge wird die Gurtzunge von der Einführhilfe gehalten und weicht nicht seitlich oder nach hinten aus, so dass ein einfaches Einrasten des Gurtschlosses ermöglicht wird.

Vorteilhafterweise ist vorgesehen, dass der Gurt an dem Fahrerhausdach beweglich gelagert ist. So ist der Gurt trotz der stabilisierenden Einführhilfe flexibel und/oder beweglich und stellt im Falle eines Unfalles ein nur geringes Gefahrenpotenzial dar.

Es ist in einer Ausführung vorgesehen, dass die Liege mehr als einen Gurt, vorzugsweise zwei Gurte aufweist, um eine stabile Aufhängung der Liege zu gewährleisten. Die an einer Längsseite der Liege nebeneinander angeordneten Gurte können zudem als Absturzsicherung für den Liegenden ausgebildet sein, so dass dieser gegen Herausfallen aus der Liege gesichert ist.

Vorteilhafterweise ist die Einführhilfe bzw. die Manschette, aus Kunststoff, vorzugsweise als Spritzgussteil, oder aus Aluminium ausgebildet. Es ist vorgesehen, dass die Einführhilfe zwei verrastbare oder verclibsbare Schalen aufweist, die den Gurt und die Gurtzunge umschließen. So ist es möglich, die Einführhilfe kostengünstig herzustellen und einfach zu montieren. Auch eine nachträgliche Montage oder Nachrüstung oder ein Tausch der Einführhilfe ist problemlos möglich.

Eine Verwendung der Liege kann in einem Fahrerhaus als einzelne Liege, die platzsparend verstaubar ist, erfolgen. Es ist auch möglich, die Liege in einem Fahrerhaus zu verwenden, das mehr als eine Liege aufweist, wobei die erfindungsgemäße Liege dann vorteilhafterweise als obere Liege einer übereinander angeordneten Doppelliege ausgebildet ist. Es ist auch möglich, die Liege in einem Fahrerhaus eines Camping- oder Freizeitfahrzeug zu verwenden.

In den Figuren sind weitere Ausführungsbeispiele der Erfindung dargestellt und erläutert.

Dabei zeigen:
- Fig.1: Einen Querschnitt eines Fahrerhauses mit Liegenanordnung,
- Fig. 2: Einen Schnitt durch die Liege mit Gurtverlauf,
- Fig. 3: Eine Ansicht der Einführhilfe.

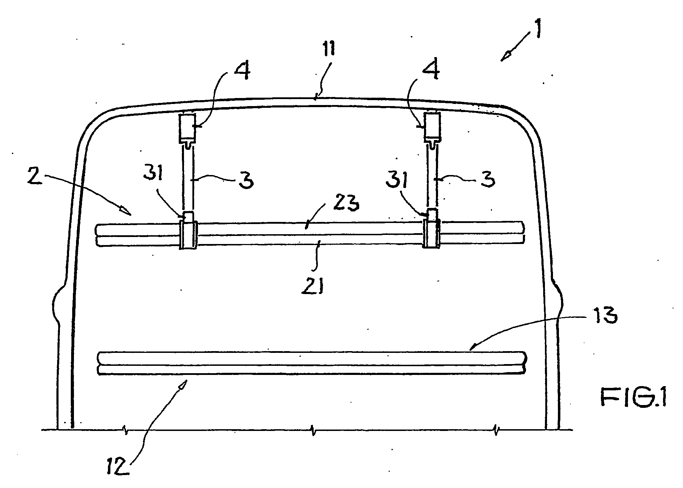

In der Figur 1 ist ein Querschnitt eines Fahrerhauses 1 eines Nutzfahrzeugs dargestellt. Das Fahrerhaus 1 weist in seinem hinteren Bereich zwei übereinander angeordnete Liegen 2 und 12 auf. Die untere Liege 12 ist eine herkömmlich ausgebildete Liege, die auf einer Auflage, z. B. ein Schranksystem aufliegend ausgebildet ist und eine Matratze 13 aufweist. Die obere Liege 2 ist eine schwenkbar an der Rückwand des Fahrerhauses 1 gelagerte Liege 2, die bei Nichtgebrauch nach oben zum Fahrerhausdach 11 hin weggeschwenkt werden kann.

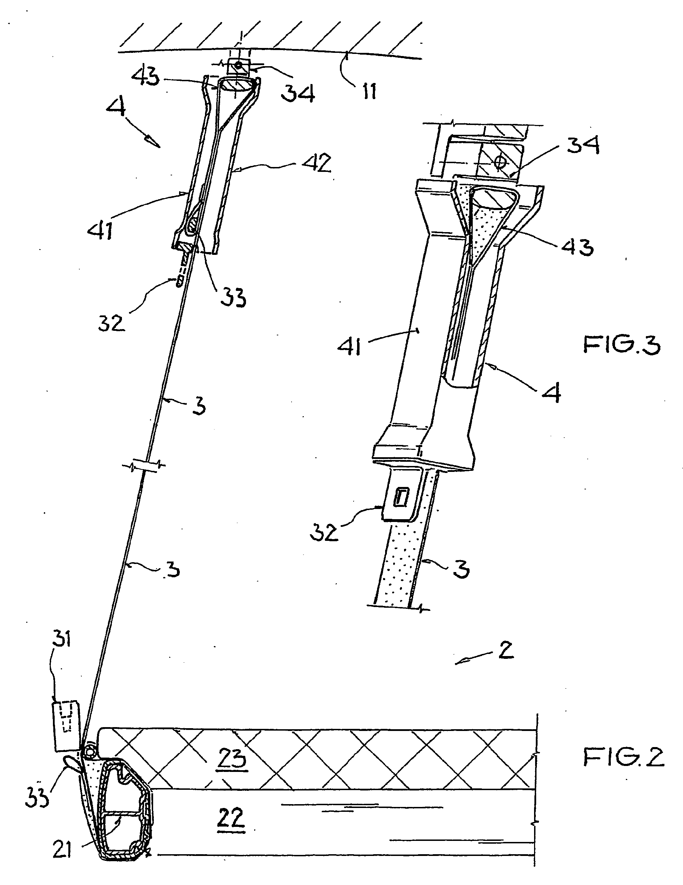

Die Liege 2 weist zwei längs der Liegefläche parallel verlaufende Holme 21 auf, die über Querstreben 22 miteinander verbunden sind, wie in der Figur 2 im Querschnitt gezeigt ist. Die Holme 21 und die diese verbindenden Querstreben 22 bilden eine Auflagefläche für eine Matratze 23. Der hintere Holm 21 ist mit der Rückwand des Fahrerhauses 1 über zwei Scharniere schwenkbar verbunden. Der vordere Holm 21 ist über zwei Gurte 3 an dem Dach des Fahrerhauses 1 aufgehängt. Die beiden Gurte 3 sind an der vorderen Längsseite der Liege 2 mit Abstand nebeneinanderliegend angeordnet und am Fahrerhausdach 11 aufgehängt. Die Gurte 3 halten die Liege in der dargestellten horizontalen Gebrauchsposition. Die Gurte 3 sind flexibel ausgebildet und können so als Absturzsicherung für einen Liegenden dienen.

Auf Höhe der Liege 2 bzw. der Matratze 23 ist ein mit dem Gurt 3 verbundenes Gurtschloss 31 angeordnet. Das Gurtschloss 31 ist in einer Gurtschlaufe 33 des Gurtes 3 eingenäht und damit sicher an dem Gurt 3 gehaltert. Im Bereich des Fahrerhausdaches 11 ist der Gurt 3 in einer Aufhängung 34 beweglich gelagert.

Im Bereich des Daches 11 weist der Gurt 3 eine Gurtzunge 32 und eine Einführhilfe 4 auf. Die Gurtzunge 32 ist in einer Gurtschlaufe 32 des Gurtes 3 angeordnet und mit der Einführhilfe 4 verbunden.

Zum Schwenken der Liege 2 in eine platzsparende Verstauposition wird die Liege 2 nach oben in Richtung Fahrerhausdach 11 geschwenkt. Durch manuelles Verbinden von Gurtschloss 31 und Gurtzunge 32 wird die Liege 2 in der platzsparenden Verstauposition am Fahrerhausdach 11 sicher gehalten. Um eine einfache Einhandbedienung zu ermöglichen, weist der Gurt 3 die Einführhilfe 4 auf, die bei dem flexibel ausgebildeten Gurt 3 das einhändige Verbinden von Gurtschloss 31 und Gurtzunge 32 ermöglicht. Das Lösen der Verbindung von Gurtschloss 31 und Gurtzunge 32 erfolgt durch Druck auf eine Entriegelungstaste des Gurtschlosses 31. Danach kann die Liege 2 von der Verstauposition in die horizontale Gebrauchsposition geschwenkt werden.

Die Einführhilfe 4 ist als Manschette ausgebildet und umgreift den Gurt 3 und die Gurtzunge 32. Sie stabilisiert den an die Gurtzunge 32 in Richtung Fahrerhausdach 11 anschließenden Gurtabschnitt mechanisch. Dadurch wird die Gurtzunge 32 stabil gehalten und weicht bei Druck von unten nicht aus, so dass ein Verbinden von Gurtschloss 31 und Gurtzunge 32 einfach möglich ist.

Der Gurt 3 ist in der Einführhilfe 4 über eine Gurtführung 43 definiert geführt, so dass seine Lage zusätzlich stabilisiert wird. Am Dach 11 des Fahrerhauses 1 ist der über die Gurtführung 43 geführte Gurt 3 in einem Schwenklager 34 beweglich gelagert. Durch die schwenkbare Lagerung ist der Gurt 3 auf seiner ganzen Länge beweglich und flexibel ausgebildet, um möglichst wenig Verletzungsgefahr darzustellen. Dennoch ist der Gurt 3 ausreichend starr um ein einfaches Verbinden von Gurtschloss 31 und Gurtzunge 32 zu ermöglichen.

Die in der Figur 3 vergrößert dargestellte Einführhilfe 4 ist als Kunststoffteil ausgebildet. Die Einführhilfe 4 weist zwei Schalen 41 und 42 auf, die miteinander verclipsbar sind. So kann die Einführhilfe 4 besonders einfach montiert werden, indem die Schalen 41 und 42 um den Gurt 3 und die Gurtzunge 32 gelegt und durch verclipsen oder verrasten oder verkleben oder verschrauben miteinander verbunden werden. So ist auch eine Reparatur oder ein nachträglicher Austausch der Einführhilfe problemlos möglich. Die Einführhilfe 4 bzw. die Schalen 41 und 42 können besonders kostengünstig im Kunststoff Spritzgussverfahren hergestellt werden.

## Patentansprüche

1. Fahrerhaus für ein Nutzfahrzeug, mit einer Liege (2), die an ihrer einen Seite an einer Wand des Fahrerhauses schwenkbar gelagert-ist, so dass die Liege (2) von einer horizontalen Gebrauchsposition in eine platzsparende Verstauposition schwenkbar ist und wobei die Liege (2) an ihrer anderen Seite über einen flexiblen Gurt (3) am Fahrerhausdach (11) aufgehängt ist, der die Liege (2) in einer Gebrauchsposition hält,
**dadurch gekennzeichnet,**
**dass** der Gurt (3) die Liege (2) in der Verstauposition fixiert, indem der Gurt (3) eine mit einem Gurtschloss (31) zusammenwirkende Gurtzunge (32) aufweist und eine das manuelle Verbinden von Gurtschloss (31) und Gurtzunge (32) erleichternde Einführhilfe (4) aufweist.

2. Fahrerhaus nach Anspruch 1,
**dadurch gekennzeichnet,**
**dass** das Gurtschloss (31) im Bereich der Liege (2) und die Gurtzunge (32) im Bereich des Fahrerhausdaches (11) angeordnet ist und dass das Gurtschloss (31) und die Gurtzunge (32) mit dem Gurt (3) verbunden sind, vorzugsweise in einer Gurtschlinge (33) befestigt sind.

3. Fahrerhaus nach Anspruch 1 oder 2,
**dadurch gekennzeichnet,**
**dass** die Einführhilfe (4) als Manschette ausgebildet ist, die die Gurtzunge (32) und den Gurt (3) umgreift.

4. Fahrerhaus nach Anspruch 3,
**dadurch gekennzeichnet,**
**dass** die Einführhilfe (4) zwei miteinander verrastbare oder verclipsbare Schalen (41, 42) aufweist.

5. Fahrerhaus nach Anspruch 3 oder 4,
**dadurch gekennzeichnet,**
**dass** die Einführhilfe (4) aus einem Kunststoff oder aus Aluminium ausgebildet ist.

6. Fahrerhaus nach einem der vorhergehenden Ansprüche,
**dadurch gekennzeichnet,**
**dass** die Einführhilfe (4) das manuelle Verbinden von Gurtschloss (31) und Gurtzunge (32) erleichtert, indem die Einführhilfe (4) einen an der Gurtzunge (32) angrenzenden Gurtabschnitt mechanisch stabilisiert.

7. Fahrerhaus nach Anspruch 6,
**dadurch gekennzeichnet,**
**dass** die Einführhilfe (4) eine Gurtführung (43) aufweist, die den Gurt (3) mechanisch stabilisiert.

8. Fahrerhaus nach einem der vorhergehenden Ansprüche,
**dadurch gekennzeichnet,**
**dass** der Gurt (3) beweglich, vorzugsweise schwenkbar, an dem Fahrerhausdach (11) gehaltert ist.

## Claims

1. Driver's cab for a commercial vehicle, having a bunk (2) which is mounted pivotably on its one side on a wall of the driver's cab, so that the bunk (2) can be pivoted from a horizontal use position into a space-saving storage position, and the bunk (2) being suspended on its other side from the driver's cab roof (11) via a flexible strap (3) which holds the bunk (2) in a use position, **characterized in that** the strap (3) fixes the bunk (2) into the storage position by the strap (3) having a strap tongue (32) which interacts with a strap buckle (31), and having an insertion aid (4) which facilitates the manual connection of the strap buckle (31) and strap tongue (32).

2. Driver's cab according to Claim 1, **characterized in that** the strap buckle (31) is arranged in the region of the bunk (2) and the strap tongue (32) is arranged in the region of the driver's cab roof (11), and **in that** the strap buckle (31) and the strap tongue (32) are connected to the strap (3), and are preferably fastened in a strap loop (33).

3. Driver's cab according to Claim 1 or 2, **characterized in that** the insertion aid (4) is designed as a sleeve which fits around the strap tongue (32) and the strap (3).

4. Driver's cab according to Claim 3, **characterized in that** the insertion aid (4) has two shells (41, 42) which can be latched or clipped to each other.

5. Driver's cab according to Claim 3 or 4, **characterized in that** the insertion aid (4) is formed from a plastic or from aluminium.

6. Driver's cab according to one of the preceding claims, **characterized in that** the insertion aid (4) facilitates the manual connection of the strap buckle (31) and strap tongue (32) by the insertion aid (4) mechanically stabilizing a strap section adjacent to the strap tongue (32).

7. Driver's cab according to Claim 6, **characterized in that** the insertion aid (4) has a strap guide (43) which mechanically stabilizes the strap (3).

8. Driver's cab according to one of the preceding claims, **characterized in that** the strap (3) is mounted moveably, preferably pivotably, on the driver's cab roof (11).

## Revendications

1. Cabine pour un véhicule utilitaire, comprenant une couchette (2), qui est montée à pivotement sur un côté d'une paroi de la cabine, de sorte que la couchette (2) puisse être pivotée d'une position d'utilisation horizontale dans une position de rangement compacte et
la couchette (2) étant accrochée par le biais d'une courroie flexible (3) au niveau de son autre côté au toit de la cabine (11) qui maintient la couchette (2) dans une position d'utilisation,
**caractérisée en ce que**
la courroie (3) fixe la couchette (2) en position de rangement **en ce que** la courroie (3) présente une languette de boucle (32) coopérant avec une boucle de courroie (31) et présente un élément d'enfilage (4) facilitant la connexion manuelle de la boucle de courroie (31) à la languette de boucle (32).

2. Cabine selon la revendication 1,
**caractérisée en ce que**
la boucle de courroie (31) est disposée dans la région de la couchette (2) et la languette de boucle (32) est disposée dans la région du toit de la cabine (11) et **en ce que** la boucle de courroie (31) et la languette de boucle (32) sont connectées à la courroie (3), de préférence sont fixées dans une ceinture de courroie (33).

3. Cabine selon la revendication 1 ou 2,
**caractérisée en ce que**
l'élément d'enfilage (4) est réalisé sous la forme d'une manchette qui s'engage autour de la languette de boucle (32) et de la courroie (3).

4. Cabine selon la revendication 3,
**caractérisée en ce que**
l'élément d'enfilage (4) présente deux coques (41, 42) pouvant être emboîtées ou encliquetées l'une avec l'autre.

5. Cabine selon la revendication 3 ou 4,
**caractérisée en ce que**
l'élément d'enfilage (4) est réalisé en plastique ou en aluminium.

6. Cabine selon l'une quelconque des revendications précédentes,
**caractérisée en ce que**
l'élément d'enfilage (4) facilite la connexion manuelle de la boucle de courroie (31) à la languette de boucle (32), **en ce que** l'élément d'enfilage (4) stabilise mécaniquement une portion de courroie adjacente à la languette de boucle (32).

7. Cabine selon la revendication 6,
**caractérisée en ce que**
l'élément d'enfilage (4) présente un guidage de courroie (43) qui stabilise mécaniquement la courroie (3).

8. Cabine selon l'une quelconque des revendications précédentes,
**caractérisée en ce que**
la courroie (3) est retenue de manière mobile, de préférence pivotante, au toit de la cabine (11).
